# EUROPÄISCHE PATENTSCHRIFT

(11) **EP 2 338 625 B1**
(45) Veröffentlichungstag und Bekanntmachung des Hinweises auf die Patenterteilung: **21.10.2015**
(21) Anmeldenummer: 10015998.7
(22) Anmeldetag: 23.12.2010
(51) Int. Cl.: B23C 3/06, B23D 37/00, B23P 13/02

(54) **Verfahren zum Bearbeiten von Haupt- und Hublagern von Kurbelwellen**
Method for machining main bearings and pin bearings of crankshafts
Procédé d'usinage de paliers principaux et de paliers mobiles de vilebrequins

(30) Priorität: 28.12.2009 DE 102009060926
(43) Veröffentlichungstag der Anmeldung: 29.06.2011
(73) Patentinhaber: NILES-SIMMONS Industrieanlagen GmbH, 09117 Chemnitz (DE)
(72) Erfinder: Haberkorn, Reiner, 09117 Chemnitz (DE); Naumann, Hans J., Prof. Dr., 09117 Chemnitz (DE)
(74) Vertreter: Patentanwälte Findeisen & Neumann

(56) Entgegenhaltungen:
- EP-A1- 0 417 446
- EP-A2- 0 379 723
- WO-A1-2007/009481
- DE-A1- 10 235 957
- DE-A1- 19 643 192
- DE-A1- 19 749 940
- DE-A1-102004 035 289

## Beschreibung

Die Erfindung betrifft ein Verfahren zum Bearbeiten der Lagersitze von Haupt- und Hublagern von Kurbelwellen sowie der jeweils an die Lagersitze angrenzenden Seitenflächen nach dem Vorbearbeiten einer Kurbelwelle.

DE 197 49 940 C2 beschreibt ein Verfahren zur spanabhebenden Bearbeitung der Lagerflächen und angrenzenden Seitenflächen von Kurbelwellen. Dieses Verfahren dient insbesondere dazu, Kurbelwellen "trocken" zu bearbeiten. Somit soll das Schleifen von Lagersitzen an Kurbelwellen vermieden werden, weil die Entsorgung von Schleifschlämmen problematisch ist und die Wirtschaftlichkeit der Bearbeitung von Kurbelwellen einschränkt. Aus dieser Druckschrift ist es beispielsweise bekannt, Kurbelwellen durch Spanen - Härten - Spanen - und Finishen zu bearbeiten. Mit diesem Verfahren kann zwar eine Genauigkeit in den genannten Bereichen erzielt werden, eine Fertigbearbeitung ohne nachträgliche Anwendung von speziellen Bearbeitungsoperationen mit unbestimmter Schneide ist jedoch nicht möglich.

DE 197 49 939 C2 beschreibt hierzu mögliche Verfahrensschritte, wie beispielsweise Drehräumen, Dreh-Drehräumen, Außenfräsen, und Drehfräsen. Auch die dazu erforderlichen Werkzeuge werden eingehend beschrieben. In diesem Zusammenhang wird auch ein Härten in der Maschine, zum Beispiel mittels Laserstrahl, insbesondere der Lagerflächen, erwähnt. Das Härten erfolgt nur an den tatsächlich benötigten Stellen. Das Außenfräsen ist für eine Fertigbearbeitung nicht geeignet, es bleibt ein definiertes restliches Aufmass mit frästypischer Oberflächenstruktur stehen. Davon abgesehen wird das Fertigbearbeiten in der Druckschrift überhaupt nicht erwähnt. Das Drehräumen wurde bisher nicht zum Fertigbearbeiten nach dem Härten eingesetzt. Bekannte Druckschriften zum orthogonalen Drehfräsen - tangential zum Lagersitz - beinhalten die Lagerbearbeitung ohne Radius mit Einstich.

Weiterhin ist zur Fertigbearbeitung das Form-Maß-Finishen bekannt. Dieses Form-Maß-Finishen ist ein spanender Prozess mit vielen gleichzeitig im Eingriff befindlichen nicht definierten Schneiden bei geringer Schnittgeschwindigkeit (ca. 15 m/min). Ein Werkzeug zum Durchführen des Form-Maß-Finishen ist zum Beispiel aus EP 0 161 748 B1 bekannt. Insbesondere beschreibt diese Druckschrift ein Verfahren und eine Vorrichtung zur Beseitigung von Geometriefehlern, also von größeren Restaufmaßen aus der Vorbearbeitung, durch eine intensive Feinbearbeitung.

Zu nennen ist ferner EP 0 417 446 A1, die eine "3-Phasen-Kurbelwellenbearbeitung im nichtgehärteten Zustand" betrifft. Dieses Verfahren umfasst die folgenden Schritte:
- Fräsen der Wangen-Seitenflächen,
- Drehen des Lagerdurchmessers bis zu einem geringen Aufmaß; einleitend wird ein Aufmaß von 1/10 mm genannt,
- Drehräumen der Lagerdurchmesser auf Sollmaß,
- Drehen/Drehräumen von Einstichen etc.

Die bisher benannten Verfahren, Außenfräsen und Drehräumen, wurden nicht zur Fertigbearbeitung vorgesehen, sondern lediglich als Bearbeitung auf ein bestimmtes Aufmaß. Danach erfolgte immer das Schleifen oder ein intensives Form-Maß-Finishen gemäß der oben genannten EP 0 161 748 B1. Eine Fertigbearbeitung von Kurbelwellen durch orthogonales Drehfräsen ist aus WO 2007 / 009 481 A1 bekannt.

Aufgabe der vorliegenden Erfindung ist es, ein Verfahren vorzuschlagen, mit welchem Kurbelwellen, bei denen an den Übergängen zwischen den Lagersitzen und den angrenzenden Seitenflächen keine Einstiche vorhanden sind, spanabhebend, das heißt "trocken", durch Feinbearbeitung fertig bearbeitet werden können. Bei derartigen Kurbelwellen ohne Einstiche spricht man von "tangierenden Radien", wobei eine Kurbelwelle dieser Art beispielsweise aus DE 102 35 957 B4 bekannt ist. Allerdings beschreibt diese Druckschrift nicht das eigentliche Erzeugen von tangierenden Radien, sondern lediglich eine Nachbearbeitung von festgewalzten Radien durch alle bisher gängigen Verfahren.

Erfindungsgemäß wird die Aufgabe dadurch gelöst, dass die Lagersitze durch Fräsen oder Drehräumen vorbearbeitet und die vorbearbeiteten Lagersitze fertig bearbeitet werden, indem man die Lagersitze und angrenzende Teilabschnitte der Seitenflächen härtet, die gehärteten Lagersitze drehfräst, die gehärteten, angrenzenden Teilabschnitte der Seitenflächen hartfeindrehfräst und die drehgefrästen Lagersitze hartfeindrehräumt. Als "Hartfeindrehräumen" wird im vorliegenden Sachverhalt die Bearbeitung gehärteter Flächen durch Feindrehräumen als abschließende Fertigbearbeitung der Lagersitze verstanden.

Neu an der vorliegenden Erfindung ist die Anwendung des Hartfeindrehräumens als Fertigschnitt zur Lagerbearbeitung mit Übergangsradius (tangierende Radien), insbesondere auch der exzentrischen Flächen. Ebenso trifft das auf das orthogonale Feindrehfräsen (mit Längs- und Quervorschub) mit Radiusschneiden zu, zum Bearbeiten der Ölbunde und Passlager.

Während des Hartfeindrehräumens erfolgt eine Regelung der Passivkräfte. Aufgrund der hohen Genauigkeitsanforderungen an die fertig bearbeiteten Kurbelwellen wird eine automatisierte Zustellungskorrektur vorgesehen, die es ermöglicht, die momentanen Passivkräfte an der Eingriffstelle zu optimieren.

Durch spezielle Korrekturmasken wird eine Minimierung der Formfehler (Rundheit) der bearbeiteten Lagerflächen vorgesehen. Formanforderungen der Lagerflächen (Balligkeit) werden über Korrekturen der Schneide und/oder der Zustellung erreicht.

Weitere vorteilhafte Ausführungsformen des Verfahrens sind Gegenstand von Unteransprüchen.

Nachfolgend wird die Erfindung an einem Ausführungsbeispiel näher beschrieben. Es zeigen in jeweils nicht maßstäblicher Wiedergabe die
Fig. 1 eine Kurbelwelle für einen 4-Zylinder-PKW-Motor in Seitenansicht
Fig. 2 einen Lagersitz gemäß Detail "A" aus Fig. 1 in vergrößertem Maßstab
Fig. 3 ein erstes Dreh-Fräswerkzeug in Seitenansicht
Fig. 3a das Dreh-Fräswerkzeug in perspektivischer Ansicht
Fig. 3b das Dreh-Fräswerkzeug in Draufsicht
Fig. 3c den Schneidkopf des Dreh-Fräswerkzeugs
Fig. 4 die an einen Lagersitz gemäß Detail "A" aus Fig. 1 angrenzenden Seitenflächen
Fig. 5a ein zweites Dreh-Fräswerkzeug zum Bearbeiten der Seitenflächen in
   perspektivischer Ansicht
Fig. 5b das zweite Dreh-Fräswerkzeug in Draufsicht
Fig. 6 das Vor- und Fertigdrehräumen an einem Lagersitz gemäß Detail "A" aus Fig. 1
Fig. 7 eine Drehfräsmaschine in perspektivischer Ansicht
Fig. 8 eine Drehräummaschine in Seitenansicht
Fig. 9 einen Abschnitt eines scheibenförmigen Drehfräswerkzeugs in perspektivischer Ansicht

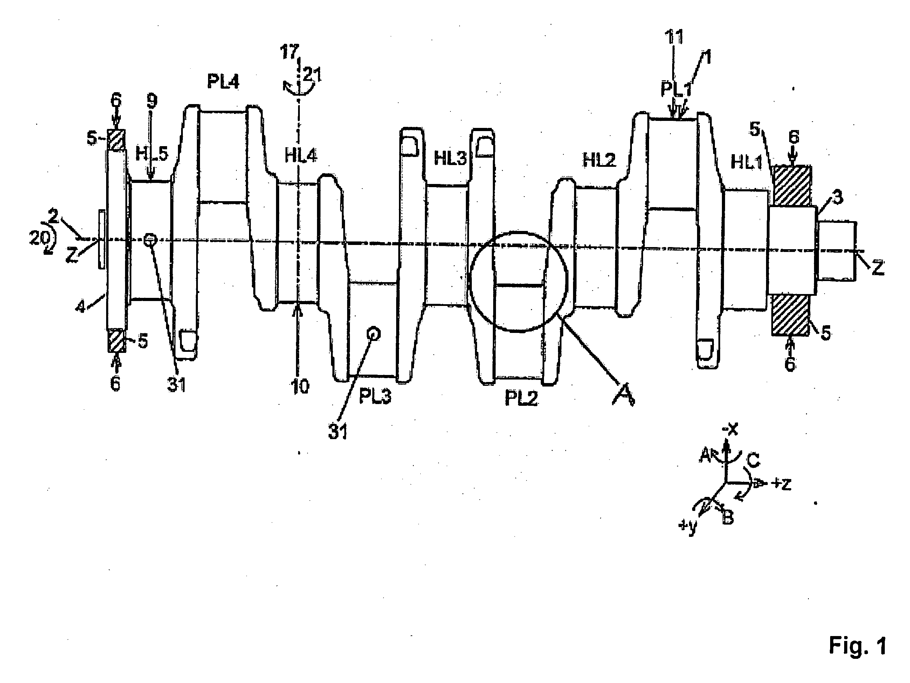

Die in Fig. 1 dargestellte vorbearbeitete Kurbelwelle 1 ist um ihre Hauptdrehachse 2 in einer Werkzeugmaschine (nicht gezeigt) drehbar eingespannt, in welcher die Lagersitze ihrer Haupt- und Hublager nunmehr durch Feindrehfräsen bearbeitet werden. Am Zapfen 3 beginnend sind die Hauptlager nacheinander als HL1 bis HL5 bezeichnet. Ähnlich ist die Bezeichnung der Hublager, die in der Zeichnung vom Zapfen 3 beginnend nacheinander als PL1 bis PL4 bezeichnet sind. Das dem Zapfen 3 gegenüberliegende Ende der Kurbelwelle 1 ist der Flansch 4. Im dargestellten Ausführungsbeispiel wird die Kurbelwelle 1 am Flansch 4 und am Zapfen 3 von je einem Spannfutter gespannt, von dem jeweils zwei Spannbacken 5 dargestellt sind. Die Spannkräfte wirken entsprechend der Richtung der Pfeile 6 in radialer Richtung auf den Flansch 4.

Die Drehachse 2 der Kurbelwelle 1 ist zugleich die in Z-Richtung verlaufende C-Achse der Werkzeugmaschine. Beginnend am Flansch 4 werden nacheinander zunächst die Hauptlager HL5 bis HL1 der Kurbelwelle 1 gemäß dem Pfeil 9 durch Drehfräsen spanabhebend bearbeitet. Während der Bearbeitung in Richtung des Pfeils 9 (X-Richtung der Werkzeugmaschine) erfolgt das Abstützen der Kurbelwelle 1 in Richtung des zur Bearbeitungsrichtung 9 entgegen gesetzten Pfeils 10.

Das Abstützen in Richtung des Pfeils 10 erfolgt durch mehrere Lünetten (nicht gezeigt) der Werkzeugmaschine. Dabei erfolgt eine Bearbeitung von HL5 bei Abstützung an HL4, eine Bearbeitung von HL4 bei Abstützung an HL3, eine Bearbeitung von HL3 bei Abstützung an HL4 und/oder HL2, eine Bearbeitung von HL2 bei Abstützung an HL3 und eine Bearbeitung von HL1 bei Abstützung an HL2.

Ähnlich gestaltet sich das Abstützen bei der Bearbeitung der Hublager PL1 bis PL4. Bei einer Bearbeitung von PL1, beispielsweise in der Bearbeitungsrichtung 11, erfolgt das Abstützen an HL1 und/oder HL2. Die Bearbeitung von PL2 wiederum erfolgt bei Abstützung an HL2 und/oder HL3, die Bearbeitung von PL3 bei Abstützung an HL3 und/oder HL4 und schließlich die Bearbeitung von PL4 bei Abstützung an HL4 und/oder HL5. Der Einfachheit halber wird angenommen, dass die Bearbeitungsrichtung 11 der Bearbeitungsrichtung 9 und somit der X-Richtung der Werkzeugmaschine entspricht.

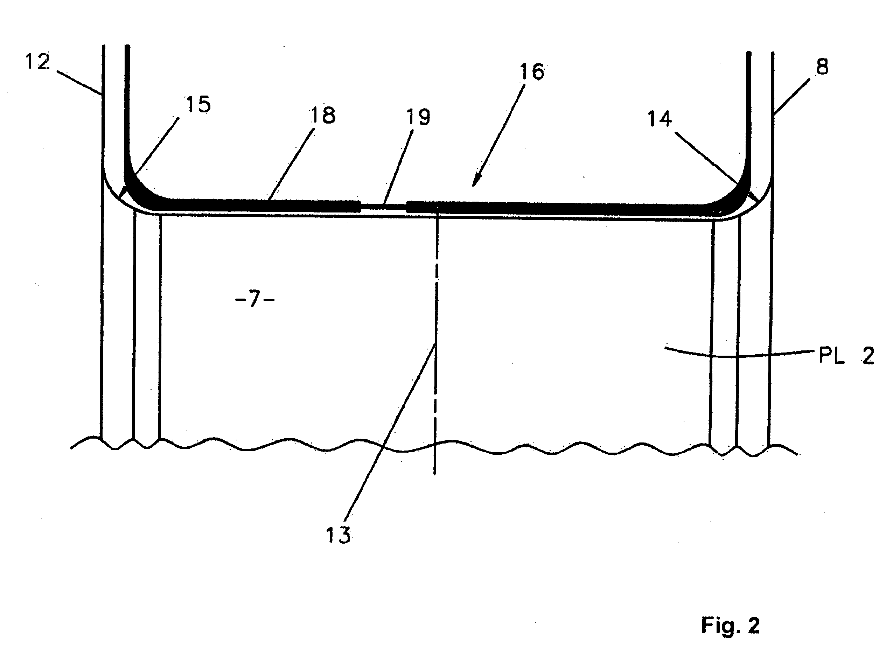

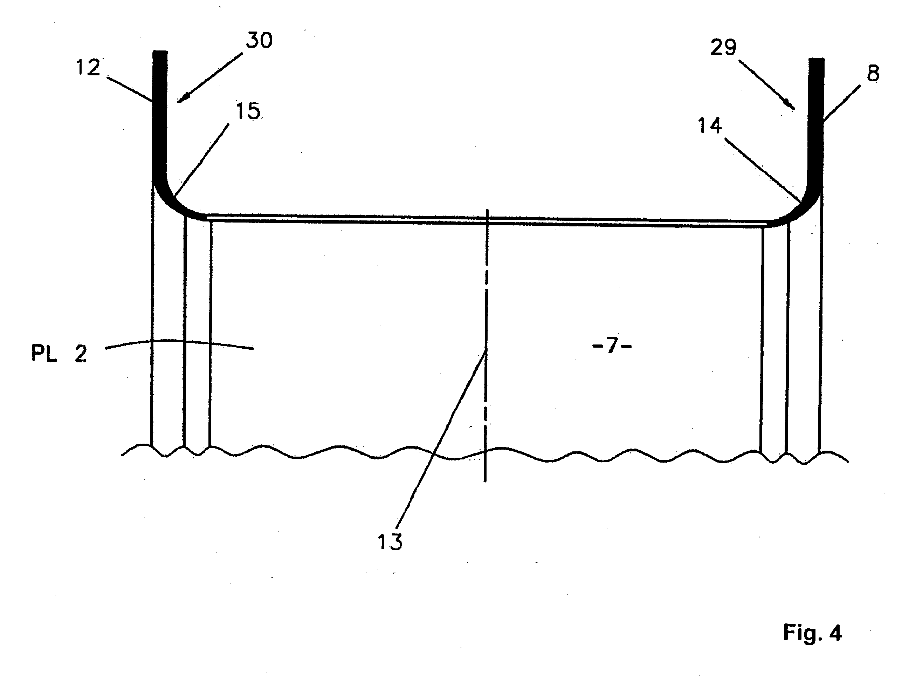

Wie aus Fig. 1 ersichtlich, liegt die Hauptdrehachse 2 der Kurbelwelle 1 in der Bearbeitungsrichtung Z der Drehachse der Arbeitsspindel (nicht gezeigt) einer Werkzeugmaschine (nicht gezeigt). Während der Bearbeitung dreht sich die Kurbelwelle 1 um ihre Hauptdrehachse 2 in der Drehrichtung 20. Der Kreis A zeigt dabei ein beliebiges Hublager PL2 der Kurbelwelle 1. Vergrößerte Darstellungen dieses Hublagers PL2 finden sich in Fig. 2, Fig. 4 und Fig. 6. Für die Hauptlager HL1 bis HL5 gilt das Gleiche wie für die Hublager PL1 bis PL4. Das Hublager PL2 hat einen Lagersitz 7, der seitlich von den beiden Seitenflächen 8 und 12 begrenzt wird. Die Breite des Lagersitzes 7 beträgt etwa 20 mm und die Linie 13 deutet die Mitte der Breite dieses Lagersitzes 7 an. Der Lagersitz 7 ist zylindrisch rund und hat einen Durchmesser zwischen 40 mm und 60 mm. Die Übergänge zwischen Lagersitz 7 und den Seitenflächen 8 und 12 sind durch Radien 14 und 15 (Fig. 2 und 4) abgerundet. Einstiche, wie sie ansonsten bei Kurbelwellen üblich sind, fehlen hier.

Nach der Vorbearbeitung werden die Oberfläche des Lagersitzes 7, die beiden Radien 14 und 15 sowie die angrenzenden Bereiche der Seitenflächen 8 und 12 gehärtet. Bevorzugt wird hier Induktivhärten angewendet. Nach dem Härten wird zunächst die Oberfläche des Lagersitzes 7 durch Drehfräsen bearbeitet. Der Pfeil 16 (Fig. 2) deutet das Aufmass an, das beim Drehfräsen abgearbeitet wird. Das Drehfräsen des Aufmasses 16 kann in einem Schnitt oder auch in mehreren Schnitten erfolgen. Sofern zwei Schnitte vorgesehen sind, wird im ersten Schnitt eine Bearbeitungstiefe 18 von 0,265 mm abgetragen. Im zweiten Schnitt erfolgt der Abtrag 19 mit einer Bearbeitungstiefe von 0,15 mm. Zugleich werden auch die Radien 14 und 15 bei den beiden Schnitten 18 und 19 mit abgetragen.

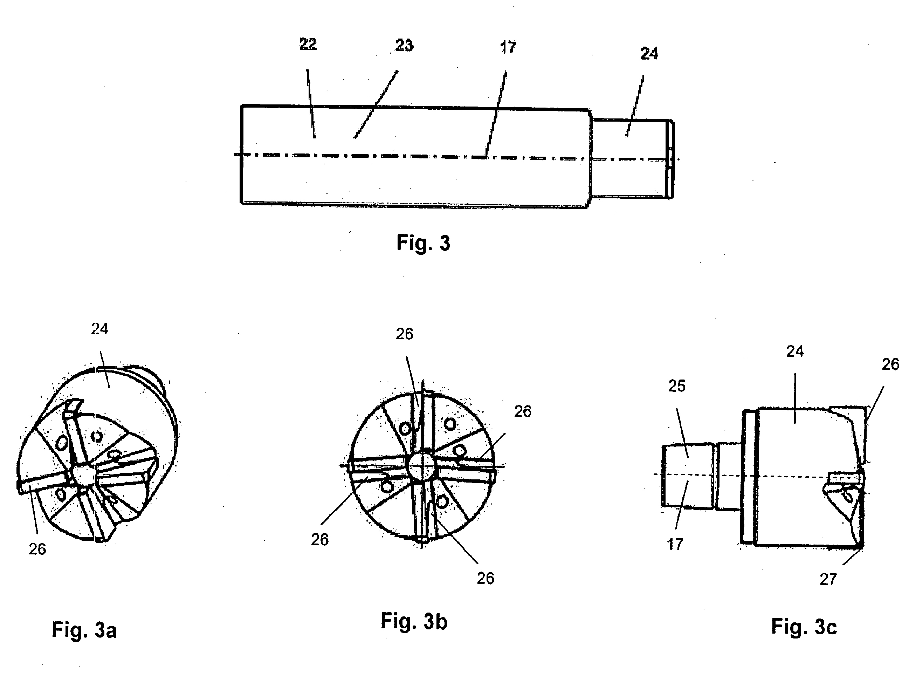

Zum Drehfräsen dient ein erstes Dreh-Fräswerkzeug 22, wie es in der Fig. 3 dargestellt ist. Das Dreh-Fräswerkzeug 22 hat einen Schaft 23 und einen Messerkopf 24. Der Messerkopf 24 wird im Schaft 23 über einen Konus 25 aufgenommen. Der Messerkopf 24 hat stirnseitige Schneiden 26, welche über den Umfang ungleich verteilt sind, wie aus Fig. 3b ersichtlich. An den äußeren Kanten sind die Schneiden mit einem Radius 27 von etwa 1,25 mm abgerundet.

Nach dem orthogonalen Drehfräsen der Lagersitze 7 mit dem Dreh-Fräswerkzeug 22 erfolgt das Bearbeiten der angrenzenden Seitenflächen 8 und 12, ebenfalls mit Hilfe eines zweiten Dreh-Fräswerkzeugs 28, welches dem Dreh-Fräswerkzeug 22 ähnlich ist. Auch hier kann der Materialabtrag in einem oder mehreren Schnitten erfolgen. Sofern zwei Schnitte vorgesehen sind, werden im ersten Schnitt 29 (Fig. 4) etwa 0,5488 mm von den beiden Seitenflächen 8 und 12 abgetragen. Im zweiten Schnitt 30 (Fig. 4) sind es dann nur noch etwa 0,4 mm, die abgetragen werden. Zugleich werden auch die Radien 14 und 15 mit bearbeitet.

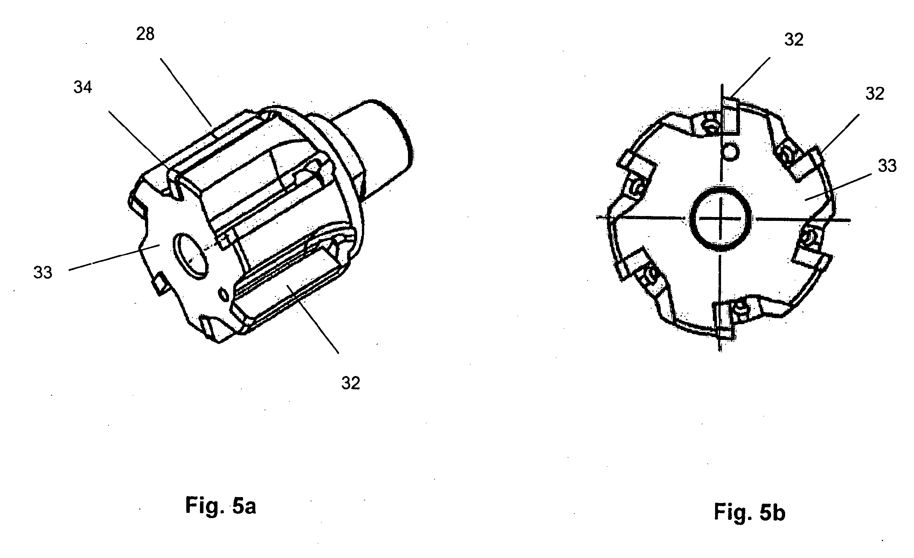

Zum Bearbeiten der angrenzenden gehärteten Seitenflächen 8 und 12 dient das zweite Dreh-Fräswerkzeug 28, wie es in Fig. 5a und 5b gezeigt ist. Dieses Dreh-Fräswerkzeug 28 besitzt Umfangsschneiden 33, die ebenfalls über dem Umfang ungleich verteilt sind, dies ist aus Fig. 5b ersichtlich. Auch beim Dreh-Fräswerkzeug 28 sind die Umfangsschneiden 32 am Übergang zur Stirnseite 33 jeweils durch einen Radius 34 abgerundet, der hier etwa 1,5 mm beträgt. Es wird ein Dreh-Fräswerkzeug 28 mit einer erhöhten Genauigkeit verwendet, beispielsweise beträgt der Rundlauf weniger als 5µm. Das Arbeitsergebnis nach dem jeweils 2-stufigen Drehfräsen zeigt Fig. 4.

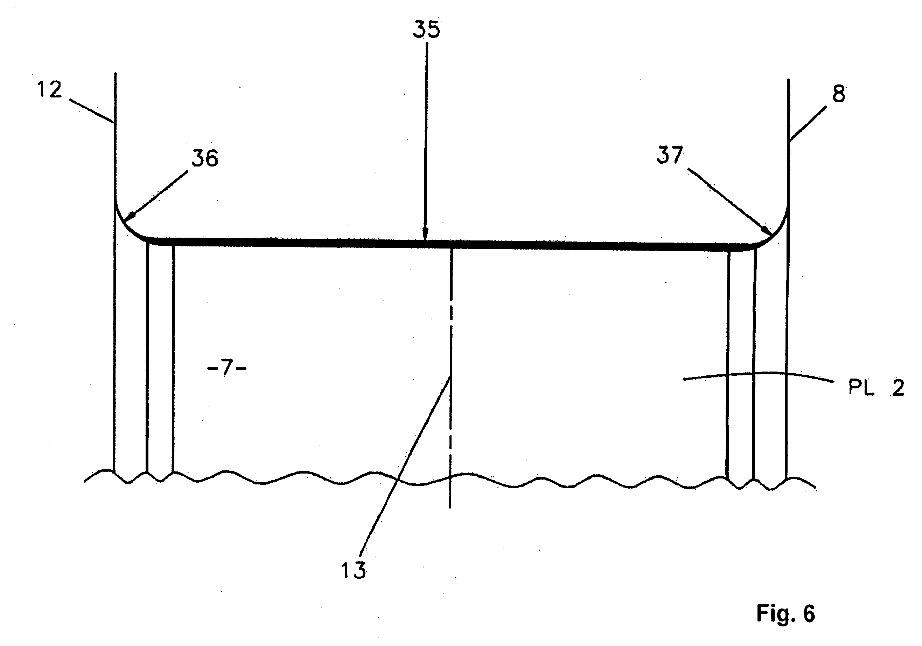

Nunmehr ist ein dritter Bearbeitungsschritt vorgesehen, der in Fig. 6 dargestellt ist. Dieser dritte Bearbeitungsschritt wird durch Hartfeindrehräumen vorgenommen. Hierbei beträgt der Materialabtrag 35 etwa 0,15 mm von der Oberfläche des Lagersitzes 7. Auch die Übergänge werden herausgearbeitet und es entstehen die beiden Radien 36 von 1,3 mm und 37 von 1,5 mm. Das Hartfeindrehräumen der Lagerflächen wird mit einer schräg gestellten Breitschlichtschneide durchgeführt. Ebenso kann die Fertigbearbeitung auch mit einem Drehräumwerkzeug mit linken und rechten Schlichtschneideinsätzen vorgenommen werden. Zum Abschluss kann die Oberfläche des Lagersitzes 7 noch nach Form gefinisht werden, der dabei erzielte Materialabtrag liegt im µm-Bereich. Dabei wird ausgehend von einer Bearbeitungszugabe von 70 µm bei einer Maßtoleranz von 5 µm der Rundheitsfehler des Lagersitzes auf einen Wert von 0,85 µm abgesenkt.

Zusammenfassend ist festzustellen, dass sich das Verfahren gemäß der vorliegenden Erfindung durch zwei neue Technologien auszeichnet:
Nach der ersten Technologie erfolgt das Fertigbearbeiten der Lagerdurchmesser durch orthogonales Feindrehfräsen mit nachfolgenden Fertig-Hartfeindrehräumen plus Fertigbearbeiten der Ölbunde und Passlager durch Umfangs-Feindrehfräsen.
Nach der zweiten Technologie erfolgt das Bearbeiten der Lagerdurchmesser durch orthogonales Feindrehfräsen und das Fertigbearbeiten der Ölbunde und Passlager durch orthogonales Feindrehfräsen. Darauf folgt das Schleifen oder das Form-Maß-Finishen der Lagerdurchmesser.

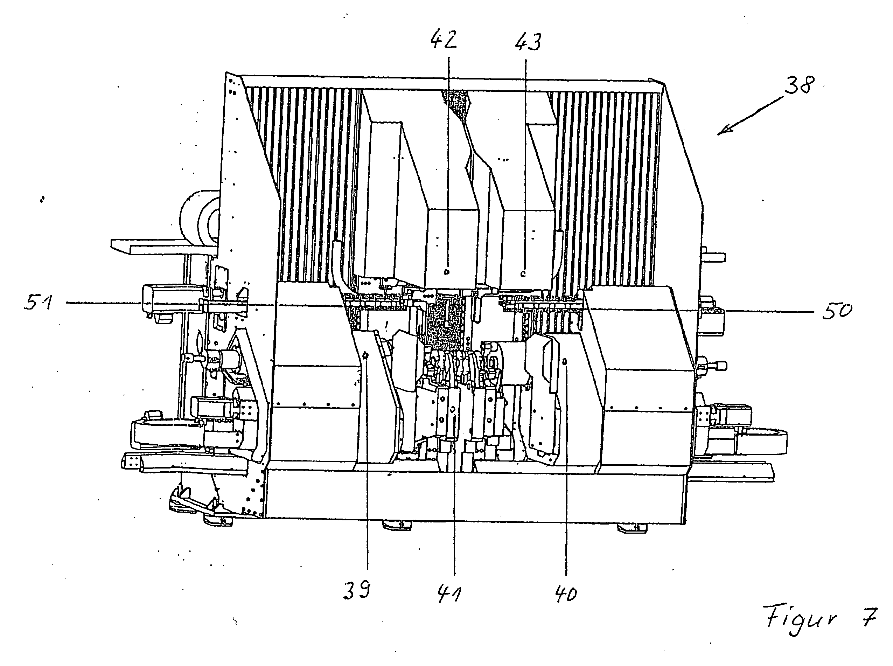

Für das Bearbeiten der Lagersitze von Haupt- und Hublagern von Kurbelwellen wird eine erste Werkzeugmaschine in Gestalt einer Drehfräsmaschine 38 gemäß Fig. 7 vorgesehen, die eine zentrische Aufnahme der Kurbelwelle 1 in Haupt 39- und Gegenspindel 40 ermöglicht. Diese Drehfräsmaschine 38 weist eine NC-Lünette 41 als Lünettenabstützung auf und hat außerdem zwei Dreh-Frässpindeln 42 und 43 mit automatischem Werkzeugwechsel. Es sind zwei Werkzeugmagazine 50 und 51 vorgesehen und eine integrierte Passlager-Vermessung (nicht gezeigt). Optional kann die Dreh-Fräsmaschine 38 noch eine integrierte Messsteuerung oder eine Messsteuerung mittels Post-Prozess-Vermessung mit integrierter Passlagervermessung aufweisen. Schließlich gibt es eine Schnittstelle (nicht gezeigt) für die automatische Beladung der Drehfräsmaschine 38 mit Kurbelwellen. Nach dem Vorfräsen erfolgt das Bearbeiten der gehärteten Lagersitze 7 durch Drehfräsen. Daran schließt sich das Fertigbearbeiten von Ölbunden und des Passlagers an. Eine NC-Lünette (nicht gezeigt) übernimmt auch hier wieder das Abstützen der Kurbelwelle 1 während der Fertigbearbeitung.

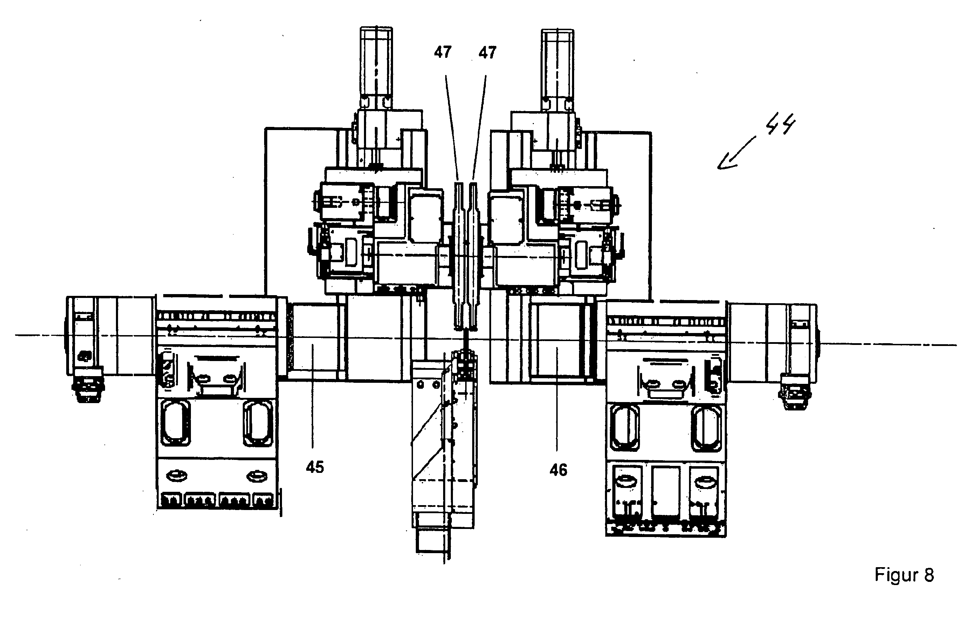

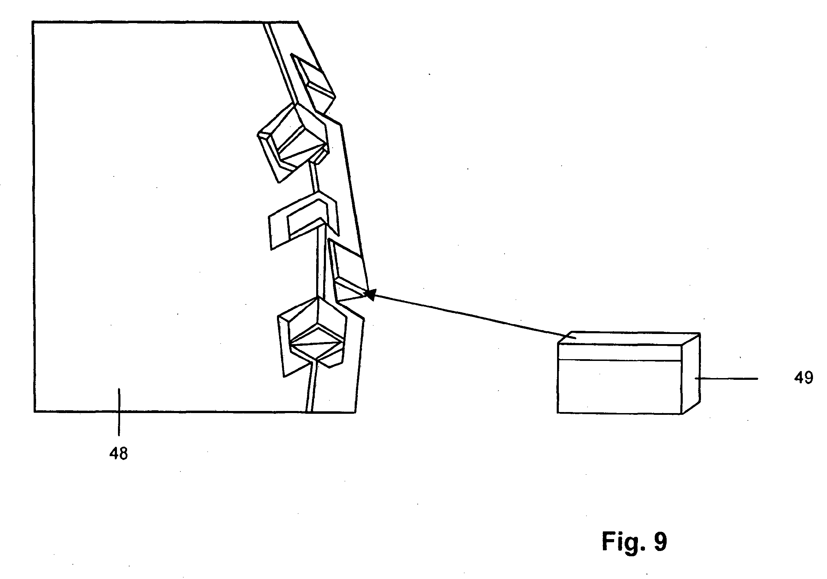

Für das Fertigbearbeiten ist eine zweite Werkzeugmaschine in Gestalt einer Drehräummaschine 44 gemäß Fig. 8 vorgesehen. Auch diese Drehräummaschine 44 weist eine Aufnahme der Kurbelwelle 1 mit Hauptspindel 45 und Gegenspindel 46 auf, wobei die Bearbeitung der Hauptlager mit Lünettenabstützung und die Bearbeitung der Hublager mittels Taktfutter in Drehmitte erfolgen kann. Es werden Drehräumwerkzeuge 47 in Scheibenausführung 48 gemäß Fig. 9 eingesetzt. Diese Drehräumwerkzeuge 47 haben tangential angeordnete Breitschlichtschneiden 49. Die Balligkeit wird über die Schrägstellung der Breitschlichtschneide 49 und über die Schneidenform erreicht. Mit Hilfe der Drehräumwerkzeuge 47 erfolgt das Hartfeindrehräumen der Lagersitze 7. Abschließend werden die Passlager der Kurbelwelle 1 fertig gedreht.

### Bezugszeichenliste

- 1: Kurbelwelle
- 2: Hauptdrehachse
- 3: Zapfen
- 4: Flansch
- 5: Spannbacken
- 6: Spannkraft
- 7: Lagersitz
- 8: Seitenfläche
- 9: Bearbeitungsrichtung
- 10: Abstützung
- 11: Bearbeitungsrichtung
- 12: Seitenfläche
- 13: Mitte des Lagersitzes
- 14: Radius
- 15: Radius
- 16: Aufmass
- 17: Drehachse des Fingerfräsers
- 18: Bearbeitungstiefe 1. Schnitt
- 19: Bearbeitungstiefe 2. Schnitt
- 20: Drehrichtung der Kurbelwelle
- 21: Drehrichtung des Fingerfräsers
- 22: erstes Dreh-Fräswerkzeug
- 23: Schaft
- 24: Messerkopf
- 25: Konus
- 26: Schneide
- 27: Radius
- 28: zweites Dreh-Fräswerkzeug
- 29: erster Schnitt
- 30: zweiter Schnitt
- 31: Ölbohrung
- 32: Umfangsschneide
- 33: Stirnseite
- 34: Radius
- 35: Materialabtrag
- 36: Radius
- 37: Radius
- 38: Drehfräsmaschine
- 39: Hauptspindel
- 40: Gegenspindel
- 41: NC-Lünette
- 42: Drehfrässpindel
- 43: Drehfrässpindel
- 44: Drehräummaschine
- 45: Hauptspindel
- 46: Gegenspindel
- 47: Drehräumwerkzeuge
- 48: Werkzeugscheibe
- 49: Breitschlichtschneide
- 50: Werkzeugmagazin, rechts
- 51: Werkzeugmagazin, links
- HL1 ... HL5: Hauptlager
- PL1 ... PL4: Hublager
- X,Y,Z,A,B,C: Koordinatenachsen und Bewegungsrichtungen für numerisch gesteuerte Arbeitsmaschinen nach DIN 66 217

## Patentansprüche

1. Verfahren zum Bearbeiten der Lagersitze von Haupt- und Hublagern von Kurbelwellen (1) sowie der jeweils an die Lagersitze (7) angrenzenden Seitenflächen (8) nach dem Vorbearbeiten einer Kurbelwelle (1), wobei bei Kurbelwellen mit unmittelbarem Übergang der Lagersitze (7) in die Seitenflächen (8), d. h. ohne Einstiche,
- die Lagersitze (7) und angrenzende Teilabschnitte der Seitenflächen (8) gehärtet werden, danach
- die gehärteten Lagersitze (7) drehgefräst werden,
- die gehärteten angrenzenden Teilabschnitte der Seitenflächen (8) hartfeindrehgefräst werden, **dadurch gekennzeichnet, dass** die drehgefrästen Lagersitze (7) auf Fertigmaß hartfeindrehgeräumt werden.

2. Verfahren nach Anspruch 1, **dadurch gekennzeichnet,**
**dass** die hartfeindrehgeräumten Lagersitze (7) nach Form gefinisht werden.

3. Verfahren nach Anspruch 1, **dadurch gekennzeichnet,**
**dass** die gehärteten Lagersitze (7) mit Übergangsradius in einem oder mehreren Schnitten orthogonal drehgefräst werden.

4. Verfahren nach Anspruch 3, **dadurch gekennzeichnet,**
**dass** ein erstes Dreh-Fräswerkzeug (22) verwendet wird, welches mehrere Schneiden (26) auf seiner Stirnseite aufweist.

5. Verfahren nach den Ansprüchen 3 und 4, **dadurch gekennzeichnet, dass** mit einem zweiten Schnitt ein Materialabtrag zwischen 0,1 mm und 0,2 mm, vorzugsweise von 0,15 mm, erfolgt.

6. Verfahren nach Anspruch 1, **dadurch gekennzeichnet,**
**dass** die gehärteten angrenzenden Teilabschnitte der jeweiligen Umfangsseitenflächen sowie Ölbunde und Passlager und zugleich die Übergänge zum Lagersitz (7) in einem oder mehreren Schnitten hartfeindrehgefräst werden.

7. Verfahren nach Anspruch 6, **dadurch gekennzeichnet,**
**dass** ein zweites Dreh-Fräswerkzeug (28) verwendet wird, welches auf seinem äußeren Umfang mehrere Schneiden (32) aufweist, die zur Stirnseite hin abgerundet sind.

8. Verfahren nach den Ansprüchen 6 und 7, **dadurch gekennzeichnet, dass** mit einem zweiten Schnitt ein Materialabtrag zwischen 0,3 mm und 0,5 mm, vorzugsweise von 0,4 mm, erfolgt.

9. Verfahren nach Anspruch 1, **dadurch gekennzeichnet,**
**dass** die drehgefrästen Lagersitze (7) fertigfeindrehgeräumt werden, indem ein Materialabtrag zwischen 0,1 mm und 0,2 mm, vorzugsweise von 0,15 mm, erfolgt.

10. Verfahren nach Anspruch 1, **dadurch gekennzeichnet,**
**dass** die Seitenflächen, welche das Passlager bilden, durch Hartfeindrehfräsen fertig bearbeitet werden.

11. Verfahren nach Anspruch 1, **dadurch gekennzeichnet,**
**dass** beim Drehräumen ein Werkzeug (47) verwendet wird, welches Schlichtschneideinsätze (49) auf der linken und der rechten Seite einer Werkzeugscheibe (48) aufweist.

12. Verfahren nach Anspruch 1, **dadurch gekennzeichnet,**
**dass** für das Drehfräsen der Hauptlager und der Hublager Drehfräswerkzeuge verwendet werden, die sich hinsichtlich ihrer Schaftlänge voneinander unterscheiden, mit kurzem Schaft für Hauptlager und langem Schaft für Hublager.

13. Verfahren nach Anspruch 12, **dadurch gekennzeichnet,**
**dass** für das Drehfräsen der Hauptlager und der Hublager Drehfräswerkzeuge verwendet werden, die sich hinsichtlich der Abrundungsradien ihrer Schneiden voneinander unterscheiden.

## Claims

1. A method for machining the bearing seats of main and pin bearings of crankshafts (1) as well as the side surfaces (8) adjoining the bearing seats (7) after premachining a crankshaft (1), wherein,
if crankshafts have a direct transition of the bearing seats (7) into the side surfaces (8),
i.e. are without grooves,
- the bearing seats (7) and adjoining segments of the side surfaces (8) are hardened, then
- the hardened bearing seats (7) are turn-milled,
- the hardened adjoining segments of the side surfaces (8) are hard-finished by turn-milling,
**characterized in that** the turn-milled bearing seats (7) are turn-broached on finished dimension.

2. The method according to claim 1, **characterized in that**
the turn-broached bearing seats (7) are finished by shape.

3. The method according to claim 1, **characterized in that**
the hardened bearing seats (7) with a transition radius are orthogonally turn-milled in one or multiple cuts.

4. The method according to claim 3, **characterized in that**
a first turn-milling tool (22) is used which comprises multiple cutting edges (26) on its front face.

5. The method according to claims 3 or 4, **characterized in that**
a second cut is used to remove material in the range between 0.1 mm and 0.2 mm, preferably 0.15 mm.

6. The method according to claim 1, **characterized in that**
the hardened adjoining segments of the respective circumferential side surfaces, as well as oil collars and flange bearings and, at the same time, the transitions to the bearing seat (7) are hard-finished by turn-milling in one or multiple cuts.

7. The method according to claim 6, **characterized in that**
a second turn-milling tool (28) is used which comprises multiple cutting edges (32) on its outer circumference which are rounded towards the front face.

8. The method according to claims 6 and 7, **characterized in that**
a second cut is used to remove material in the range between 0.3 mm and 0.5 mm, preferably 0.4 mm.

9. The method according to claim 1, **characterized in that**
the turn-milled bearing seats (7) are finished by turn-broaching **in that** material in the range between 0.1 mm and 0.2 mm, preferably 0.15 mm, is removed.

10. The method according to claim 1, **characterized in that**
the side surfaces that define the flange bearing are hard-finished by turn-milling.

11. The method according to claim 1, **characterized in that**
a tool (47) is used for turn-broaching that comprises finishing cutting inserts (49) on the left and right sides of a tool disk (48).

12. The method according to claim 1, **characterized in that**
turn-milling tools are used for turn-milling of the main bearings and pin bearings which differ in shaft length, having a short shaft for main bearings and a long shaft for pin bearings.

13. The method according to claim 12, **characterized in that**
turn-milling tools are used for turn-milling of the main bearings and the pin bearings which differ in the corner radius of their cutting edges.

## Revendications

1. Procédé d'usinage de paliers principaux et de paliers mobiles de vilebrequins (1) ainsi que de faces latérales (8) et limitrophes des différentes chaises de palier (7) qui est effectué après le pré-usinage d'un vilebrequin (1) et où en cas de vilebrequins avec raccordement direct des chaises de palier (7) aux faces latérales (8), cet-à-dire qu'il n'y a pas de passe d'outil,
- les chaises de palier (7) et les zones limitrophes des faces latérales (8) sont trempées,
- après quoi les chaises de palier trempées (7) sont usinées par tournage-fraisage et
- les zones trempées et limitrophes des faces latérales (8) sont usinées par tournage-fraisage dur et de précision,
**caractérisé en ce que** les chaises de palier usinées par tournage-fraisage (7) sont coupées à finition par tournage-brochage dur et de précision.

2. Procédé suivant la revendication 1, **caractérisé en ce**
**que** les chaises de palier usinées par tournage-brochage dur (7) sont finies par usinage à sec.

3. Procédé suivant la revendication 1, **caractérisé en ce**
**que** les chaises de palier trempées (7) avec rayon de raccordement sont usinées, en une ou plusieurs coupes, par tournage-fraisage et de façon orthogonale.

4. Procédé suivant la revendication 3, **caractérisé en ce**
**qu'**il est utilisé un premier outil de tournage-fraisage (22) qui, sur sa face frontale, est muni de plusieurs tranchants (26).

5. Procédé suivant les revendications 3 et 4, **caractérisé en ce**
**qu'**un enlèvement de matériau de 0,1 mm à 0,2 mm est obtenu moyennant une deuxième coupe, cet enlèvement de matériau étant de préférence de 0,15 mm.

6. Procédé suivant la revendication 1, **caractérisé en ce**
**que** les zones trempées et limitrophes des différentes faces latérales du périmètre ainsi que les épaulements et les paliers de butée, mais aussi les raccordements à la chaise de palier (7) sont usinés, en une ou plusieurs coupes, par tournage-fraisage dur et de précision.

7. Procédé suivant la revendication 6, **caractérisé en ce**
**qu'**il est utilisé un deuxième outil de tournage-fraisage (28) dont le périmètre extérieur présente plusieurs tranchants (32) qui, vers la face frontale de l'outil, sont de plus en plus arrondis.

8. Procédé suivant les revendications 6 et 7, **caractérisé en ce**
**qu'**un enlèvement de matériau de 0,3 mm à 0,5 mm est obtenu moyennant une deuxième coupe, cet enlèvement de matériau étant de préférence de 0,4 mm.

9. Procédé suivant la revendication 1, **caractérisé en ce**
**que** les chaises de palier usinées par tournage-fraisage (7) sont finies par tournage-brochage dur et de précision, en effectuant un enlèvement de matériau de 0,1 mm à 0,2 mm qui, cet enlèvement de matériau étant de préférence de 0,15 mm.

10. Procédé suivant la revendication 1, **caractérisé en ce**
**que** les faces latérales formant le palier de butée sont finies par tournage-fraisage dur et de précision.

11. Procédé suivant la revendication 1, **caractérisé en ce**
**que** lors du tournage-brochage est utilisé un outil (47) qui est équipé, sur les côtés gauche et droit d'un disque outil (48), d'inserts de coupe de finition (49).

12. Procédé suivant la revendication 1, **caractérisé en ce**
**que** lors du tournage-fraisage des paliers principaux et des paliers mobiles de vilebrequins sont utilisés des outils de tournage-fraisage dont les tiges présentent des longueurs différentes, les outils à tige courte correspondant aux paliers principaux, les outils à tige longue aux paliers mobiles de vilebrequin.

13. Procédé suivant la revendication 12, **caractérisé en ce**
**que** lors du tournage-fraisage des paliers principaux et des paliers mobiles de vilebrequins sont utilisés des outils de tournage-fraisage qui se distinguent par les rayons de congé de leurs tranchants.
